# EUROPÄISCHE PATENTANMELDUNG

(11) **EP 1 152 623 A1**
(43) Veröffentlichungstag der Anmeldung: **07.11.2001**
(21) Anmeldenummer: 00109456.4
(22) Anmeldetag: 03.05.2000
(51) Int. Cl.: H04Q 7/22

(54) **Verfahren zur Verarbeitung einer Kommunikationsanfrage für eine Festnetz-Verbindung**

(71) Anmelder: SIEMENS AKTIENGESELLSCHAFT, 80333 München (DE)
(72) Erfinder: Brucherseife, Jörg, 86156 Augsburg (DE); Krammer, Johann, Dr., 80657 München (DE)

(57) **Zusammenfassung**

Seitens eines Endgeräts (TEG) eines Festnetzes wird nach dem Empfang einer Kommunikationsanfrage (1) für eine Festnetz-verbindung die Kommunikationsanfrage ausgewertet und daraus gewonnene Informationen als anrufbezogene Daten zwischengespeichert; anhand dieser Daten wird eine Hinweisnachricht (3) betreffend die Anfrage (1) erzeugt und an zumindest eine Zieladresse (TNZ) unter Verwendung eines Nachrichtendienstes des Festnetzes ausgesendet, wobei das Aussenden der Hinweisnachricht nach Beendigung des der Kommunikationsanfrage (1) zugeordneten Kommunikationsvorgangs erfolgt.

## Beschreibung

Verfahren zur Verarbeitung einer Kommunikationsanfrage für eine Festnetz-Verbindung

Die Erfindung betrifft ein Verfahren zur Verarbeitung einer Kommunikationsanfrage für eine Kommunikationsverbindung eines leitungsgebundenen Telekommunikationsnetzes seitens eines über eine Endgeräteschnittstelle an das Netz angebundenen Endgeräts, an welches die Kommunikationsanfrage gesendet wird, wobei sich die Kommunikationsanfrage auf die Herstellung einer Verbindung des Netzes von einem Anrufer zu dem Endgerät bezieht.

Ebenso betrifft die Erfindung ein Telekommunikationsendgerät, welches über eine Endgeräteschnittstelle an ein leitungsgebundenes Telekommunikationsnetz anbindbar ist, mit einer Steuereinrichtung, einer Speichereinrichtung und einer Sende/Empfangseinrichtung zum Empfangen und Senden von Nachrichten und Signalisierungen über die Endgeräteschnittstelle einschließlich des Empfangs von Kommunikationsanfragen, welche sich auf die Herstellung einer Verbindung des Netzes von einem Anrufer zu dem Endgerät beziehen.

Für einen Teilnehmer eines leitungsgebundenen Telekommunikationsnetzes (= Festnetzes) ergibt sich oftmals das Problem, dass - während seiner Abwesenheit von seinem Endgerät - diesem Endgerät Anrufe zugestellt werden, jedoch nicht angenommen oder auf andere Weise sinnvoll verarbeitet werden können. In vielen Fällen verfügt der Teilnehmer über ein anderes Endgerät, zu dem jedoch eine Weiterleitung der Verbindung von dem ersten Endgerät nicht möglich ist (z.B. weil dies über Netzgrenzen hinweg erfolgen müsste oder weil der betreffende Kommunikationsdienst von dem zweiten Endgeräte nicht bedient wird) oder von dem Teilnehmer nicht gewünscht ist.

Von Mobilnetzen her ist es bekannt, dass ein Anrufer, wenn der Angerufene nicht erreichbar ist oder sein will, eine Mitteilung hinterlassen kann, z.B. in einer sogenannten Mobilbox, wobei dem ursprünglich Angerufenen eine Kurznachricht zugesandt wird, die auf den Eingang einer Mobilbox-Nachricht hinweist.

Des weiteren sind auch für Festnetze Anrufbeantworterdienste bekannt, welche von Netzbetreibern von Telefonnetzen für dessen Teilnehmer angeboten werden. Hierbei ist in dem Telefonnetz eine Netzeinrichtung vorgesehen, welche für jene Teilnehmer, die den Anrufbeantworterdienst in Anspruch nehmen, die Anrufbeantworterfunktionen durchführt. Die Aktivierung und Konfiguration des Dienstes durch den Teilnehmer erfolgen über eine Telefonverbindung zu einer Service-Rufnummer des Netzes; ebenso der Zugriff auf die gespeicherten Nachrichten, wobei jedoch auch von einem anderen Telefonanschluss aus - nach Eingabe eines PIN-Codes zur Authentifizierung des Teilnehmers - zugegriffen werden kann. Auch sind in Firmennetzen zentrale Anrufbeantworter-Server für Firmen-Telekommunikationsanlagen bekannt, die eingehende Nachrichten für Teilnehmer des Firmennetzes zentral verwalten und ebenfalls die Möglichkeit einer Fernabfrage bieten. Alle diese Möglichkeiten der Fernabfrage verlangen, dass eine Abfrage durch den Benutzer erfolgt; eine Meldung hereingekommener Anrufe an eine andere Stelle oder über alternative Übertragungsdienste ist nicht vorgesehen.

Bisherige Lösungen innerhalb von Festnetzen gestatten lediglich die Weiterleitung der Verbindung in dem gleichen Kommunikationsmedium, z.B. eine Anrufweiterleitung für Telefonanrufe, oder eine Protokollierung der auf dem Gerät eingegangenen Kommunikationsanfragen, wie z.B. im Falle einer Anruferliste eines Anrufbeantworters. Eine Benachrichtigung, welche von dem Endgerät zu einer anderen Endstelle ausgeht und in einem von dem ursprünglichen Verbindungsversuch getrennten Verbindungs- bzw. Signalisierungsvorgang durchgeführt wird, ist im Rahmen eines Festnetzes nicht bekannt.

Aufgabe der vorliegenden Erfindung ist es, einen Weg zur Benachrichtigung eines Teilnehmers betreffend auf seinem Festnetz-Endgerät ankommende Verbindungswünsche aufzuzeigen, wobei die Benachrichtigung zu einer von dem Benutzer konfigurierbaren Zielstelle selbsttätig durch das Endgerät initiiert und von dem ursprünglichen Verbindungsversuch unabhängig erfolgen soll.

Diese Aufgabe wird durch ein Verfahren der eingangs genannten Art gelöst, bei welchem folgende Schritte seitens des Endgeräts ausgeführt werden:
a) Empfang der Kommunikationsanfrage über die Endgeräteschnittstelle,
b) Auswerten der Informationen, welche mit der Kommunikationsanfrage empfangen wurden, und Zwischenspeichern zumindest eines Teils der so gewonnenen Informationen als anrufbezogene Daten,
c) Erzeugen einer Hinweisnachricht anhand der anrufbezogenen Daten, sowie
d) Aussenden der Hinweisnachricht an zumindest eine konfigurierbare Zieladresse über die Endgeräteschnittstelle unter Verwendung eines Nachrichtendienstes des leitungsgebundenen Telekommunikationsnetzes,
wobei das Aussenden der Hinweisnachricht (Schritt d) nach Beendigung des der Kommunikationsanfrage zugeordneten Kommunikationsvorgangs erfolgt.

Diese Lösung ermöglicht die unmittelbare Inkenntnissetzung eines Endgerätebenutzers über eingehende Kommunikationsanfragen und/oder Mitteilungen während seiner Abwesenheit. Nach der Erfindung werden bei dem Endgerät eintreffende Kommunikationsanfragen, gegebenenfalls zusammen mit einer Mitteilung des Anrufers, registriert und entsprechend benutzerdefinierter Vorgaben diesbezügliche Nachrichten erzeugt, die - gegebenenfalls neben der betreffenden Mitteilung - Informationen über die Kommunikationsanfrage bzw. Mitteilung, wie z.B. die Rufnummer des Anrufers, die Zeit der Anfrage usw., enthält. Diese Nachricht wird von dem Endgerät nach Eingang und Verarbeitung der Anfrage über einen geeigneten Messaging-Dienst an einen oder mehrere Zielteilnehmer gesendet. Im Gegensatz zu dem Endgerät müssen der anrufende Teilnehmer und der bzw. die Zielteilnehmer nicht unmittelbare Teilnehmer des Festnetzes sein, sondern können ohne Unterschied für die Erfindung auch einem anderen Mobil- oder Festnetz angehören.

Durch den Umstand, dass die Übermittlung der Hinweisnachricht in einem eigenen Kommunikationsvorgang erfolgt, gestattet die Erfindung zudem vorteilhafterweise die Verwendung eines Nachrichtendienstes, welcher von dem Kommunikationsdienst der ursprünglichen Kommunikationsanfrage unterschiedlich sein kann. Dies ermöglicht zusätzlich eine Weiterleitung von anrufbezogenen Informationen, ohne dass dies dem Anrufer bekannt ist.

Eine vorteilhafte Weiterbildung der Erfindung gestattet die Übermittlung einer zusätzlichen Nachricht des Anrufers dadurch, dass seitens des Endgeräts in Schritt b) zusätzlich die Kommunikationsanfrage angenommen wird, wobei von dem Festnetz eine Verbindung zu dem Endgerät hergestellt wird, und über diese Verbindung eine Mitteilung des Anrufers entgegengenommen und mit den anrufbezogenen Daten abgespeichert wird und nach Beendigung dieser Verbindung in Schritt d) diese abgespeicherte Mitteilung zusammen mit oder als Teil der Hinweisnachricht an die Zieladresse ausgesendet wird. Hierbei ist es günstig, wenn noch vorher überprüft wird, ob überhaupt eine Mitteilung akzeptiert wird. Dies geschieht zweckmäßigerweise dadurch, dass in Schritt b) anhand der anrufbezogenen Daten überprüft wird, ob gemäß einer voreinstellbaren Vorschrift eine Mitteilung entgegenzunehmen ist, und nur falls diese Überprüfung positiv ist, die Kommunikationsanfrage angenommen und eine Mitteilung des Anrufers entgegengenommen wird.

In einer bevorzugten Ausführungsform der Erfindung wird die Hinweisnachricht in ein Kurznachrichten-Format gebracht und die so erzeugte Kurznachricht unter Verwendung eines Kurznachrichten-Dienstes ausgesendet. Hierbei ist es zweckmäßig, wenn
- vor dem Aussenden der Kurznachricht über eine adäquat spezifizierte Datenverbindungsschicht ein logischer Verbindungsaufbau realisiert wird und
- die Kurznachricht im Kurznachrichten-Format in einer adäquat spezifizierten physikalischen Schicht über DTMF- oder FSK-Off-Hook-Signalisierung an ein Short-Message-Dienstzentrum gesendet wird.

Für die Realisierung des erfindungsgemäßen Verfahrens eignet sich im besonderen ein Telekommunikationsendgerät der eingangs genannten Art, worin gemäß der Erfindung die Sende/ Empfangseinrichtung zum Aussenden von Hinweisnachrichten an zumindest eine konfigurierbare Zieladresse über die Endgeräteschnittstelle unter Verwendung eines Nachrichtendienstes des leitungsgebundenen Telekommunikationsnetzes eingerichtet ist, und worin die Steuereinrichtung zum Auswerten von über die Sende/Empfangseinrichtung empfangenen Kommunikationsanfragen, einschließlich des Ableitens anrufbezogener Daten und Abspeicherns dieser Daten auf der Speichereinrichtung, und zum Erzeugen von Hinweisnachrichten betreffend jeweils eine Kommunikationsanfrage anhand der anrufbezogenen Daten und Weitergabe dieser Nachrichten an die Sende/Empfangseinrichtung eingerichtet ist, wobei das Aussenden der Hinweisnachrichten jeweils nach Beendigung des Kommunikationsvorgangs der zugeordneten Kommunikationsanfrage erfolgt.

In einer bevorzugten Ausführungsform des erfindungsgemäßen Endgeräts ist die Sende/Empfangseinrichtung dazu eingerichtet, die Hinweisnachricht in ein Kurznachrichten-Format zu bringen und die so erzeugte Kurznachricht unter Verwendung eines Kurznachrichten-Dienstes auszusenden. Hierbei ist es günstig, wenn die Sende/Empfangseinrichtung Mittel zur Implementierung des SMS-Übertragungsprotokolls zur Ein/Ausgabe von Kurznachrichten aufweist.

Die Erfindung samt weiterer Vorzüge wird im folgenden anhand eines Ausführungsbeispiels in mehreren Varianten näher erläutert. Hierfür werden die beigefügten Figuren herangezogen, welche zeigen
- Fig. 1: eine schematische Übersicht eines Telefon-Festnetzes mit zumindest einem Endgerät nach der Erfindung;
- Fig. 2: einen ersten beispielhaften Benachrichtigungsvorgang;
- Fig. 3: einen zweiten beispielhaften Benachrichtigungsvorgang;
- Fig. 4: eine Darstellung des Schichtenmodells (SI-Modells) zur Übertragung von Kurznachrichten betreffend die Konfiguration eines Endgeräts und Short-Message-Dienstzentrums im Festnetz nach Fig. 1;
- Fig. 5: ein Signalisierungsdiagramm für einen vom Telekommunikations-Endgerät initiierten Verbindungsaufbau zur Übertragung von Kurznachrichten;
- Fig. 6: ein Signalisierungsdiagramm für einen vom Short-Message-Dienstzentrum initiierten Verbindungsaufbau zur Übertragung von Kurznachrichten;
- Fig. 7: eine Darstellung des Aufbaus einer Nachricht zum Start der Kurznachrichten-Übertragungsprozedur auf der Verbindungsmanagement-Schicht; und
- Fig. 8: eine Darstellung des zugehörenden Nachrichtenformates auf der Datenverbindungs-Schicht.

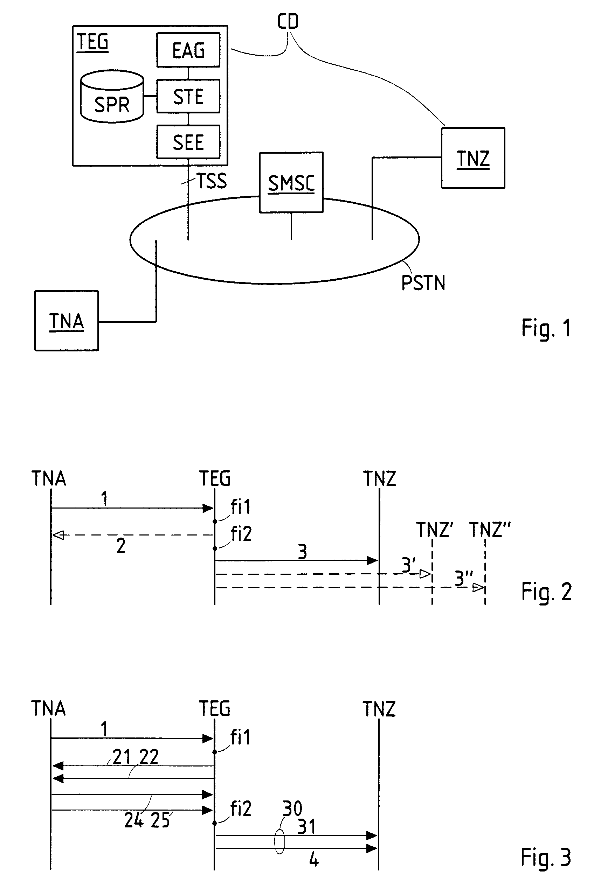

Fig. 1 zeigt ein Telefon-Festnetz PSTN, beispielsweise ein sogenanntes a/b-Netz (oft nicht ganz zutreffend auch als analoges Netz bezeichnet), an das mehrere Teilnehmer-End-geräte TNA,TEG,TNZ angeschlossen sind. Das Endgerät TEG ist über eine Telefonschnittstelle TSS an das Telefonnetz PSTN angebunden und als Einrichtung zur Durchführung der Erfindung realisiert; das Endgerät TNZ dient als jene Endeinrichtung, zu der erfindungsgemäße Hinweisnachrichten betreffend auf dem Endgerät TEG eingehende Anrufe gesendet werden ("Zieleinrichtung" bzw. "Zielteilnehmer").

Das erfindungsgemäße Endgerät TEG weist eine Sende/Empfangseinheit SEE auf, welche der Realisierung der Kommunikations-funktionen mit dem Festnetz über die Telefonschnittstelle TSS dient, sowie einen Speicher SPR, eine Steuereinrichtung STE, z.B. in Form einer Prozessoreinrichtung, und eine Ein/Ausgabe EAG. Die Ein/Ausgabe EAG umfasst beispielsweise einen Hörer bekannter Art mit Lautsprecher und Mikrophon, eine Tastatur und eine Anzeige, und dient zudem der Eingabe und Modifizierung der Gerätekonfiguration durch den Benutzer.

### Anrufbehandlung mittels einfacher Hinweisnachricht

Als Ausgangspunkt des im folgenden behandelten Vorgangs richtet ein Anrufer, welcher mit dem Benutzer des Endgeräts TEG in Verbindung treten möchte, in dem Beispiel der Teilnehmer TNA, einen Anruf an das Endgerät TEG. Die in der Folge zwischen dem Anrufer TNA, dem Endgerät TEG und dem Zielteilnehmer TNZ über das Netz PSTN ausgetauschten Nachrichten sind in dem Signalisierungsablaufdiagramm der Fig. 2 gezeigt.

In den Signalisierungsabläufen der Figuren verläuft die Zeitachse in vertikaler Richtung, und es sind der Übersichtlichkeit halber nur die Endgeräte TNA,TEG,TNZ dargestellt, wogegen die Netzstellen und die Behandlung und Weiterleitung der zwischen den Endstellen TNA,TEG,TNZ ausgetauschten Nachrichten nicht gezeigt sind.

Aufgrund des Verbindungswunsches des Anrufers TNA wird von dem Netz PSTN eine Kommunikationsanfrage 1 an das Endgerät TEG gesendet. Die Anfrage 1 ist in dem hier betrachteten Beispiel eines analogen Netzes durch die Signalisierung eines Anrufs realisiert, welche vorteilhafterweise durch eine CLIP-Nachricht des sogenannten CLIP-Dienstes ergänzt wird, in welcher eine Anruferkennung übertragen wird.

Im Falle eines ISDN-Netzes dient als Kommunikationsanfrage 1 eine SETUP-Nachricht bekannter Art, welche unter anderem Adressinformation des anrufenden Teilnehmers TNA enthält.

Das Endgerät TEG empfängt zwar die Kommunikationsanfrage 1, nimmt jedoch den Verbindungswunsch nicht an. (Im Falle des ISDN-Netzes bedeutet dies, dass keine CONNECT-Nachricht gesendet wird.) Auf diese Weise erfolgt kein Aufbau einer Verbindung, und gegenüber dem anrufenden Teilnehmer fallen keine Gebühren an, die im Zusammenhang mit einer aufgebauten Verbindung anfallen würden.

Die Ablehnung des Verbindungswunsches kann dem Anrufer TNA auch explizit angezeigt werden, z.B. mithilfe einer Besetztsignalisierung 2.

In der Steuereinheit des Endgeräts wird die empfangene Kommunikationsanfrage 1 ausgewertet; die den Anrufer TNA betreffende Adressinformation wird zusammen mit weiteren anrufbezogenen Daten, wie z.B. Datum und Uhrzeit des Anrufs, für die nachfolgende Erstellung einer Hinweisnachricht 3 zwischengespeichert.

In dem nächsten Schritt wird die bereits erwähnte Hinweisnachricht 3 erzeugt, wobei die zwischengespeicherten anrufbezogenen Daten sowie von dem Benutzer konfigurierte permanente Daten verwendet werden, und die Hinweisnachricht 3 über die Sende/Empfangseinheit an den Zielteilnehmer TNZ gesendet. Diese Hinweisnachricht wird in Form einer Nachricht eines geeigneten in dem Festnetz PSTN realisierten Dienstes erstellt, vorzugsweise ein im Rahmen des Festnetzes ablaufender Messaging-Dienst zur Übertragung von Nachrichten in Textform. Als Messaging-Dienst eignen sich für die Zwecke der Erfindung insbesondere ein E-Mail-Dienst ("elektronische Post) oder ein SMS-Dienst ('Short Message Service', "Kurznachrichten-Dienst").

Der SMS-Dienst ist vom GSM-Netz her bekannt und stellt dort eine Punkt-zu-Punkt-Übertragung von Kurznachrichten dar. Ein Beispiel einer Realisierung eines SMS-Dienstes in einem leitungsgebundenen Telekommunikationsnetz ist weiter unten in dem Abschnitt "Übermittlung der Hinweisnachricht als Kurznachricht" näher beschrieben. Bei der Verwendung eines solchen SMS-Dienstes ist die Übermittlung eines bis zu 160 Zeichen langen Nachrichteninhalts in einer Kurznachricht möglich.

Als Nachrichteninhalt der Hinweisnachricht 3 kann in dem gerade betrachteten Beispiel ein Text der Art "Ruf von 004959123456 um 12:01, 2000-03-04" (= 41 Zeichen) verwendet werden, um den Benutzer darüber zu informieren, dass ein Anrufversuch stattgefunden hat, einschließlich der Rufnummer des Absenders TNA, der Uhrzeit und des Datums des Anrufversuchs.

Falls erforderlich, können in Abhängigkeit von der durch den Benutzer auf dem Endgerät TEG eingestellten Konfiguration in dem Text der Hinweisnachricht 3 weitere Informationen aufgenommen werden. Beispiele hierfür - die natürlich auch miteinander kombiniert werden können - sind:
- eine Kennung des Endgeräts TEG selbst; ein Beispiel eines solchen Nachrichtentextes ist z.B. "Ruf an EG-1 von 004959123456 um 12:01, 2000-03-04" . Die Kennung - in dem Beispiel "EG-1" - wird beispielsweise vom Benutzer selbst vergeben und dient der Unterscheidung verschiedener Endgeräte für den Fall, dass von mehreren Endgeräten auf ein Zielgerät Benachrichtigungen gesendet werden. Alternativ könnte auch die Rufadresse des Endgeräts bzw. die entsprechende in der Kommunikationsanfrage 1 verwendete Rufadresse verwendet werden.
- eine Bezeichnung des Anrufers, die aus der Absender-Rufnummer bestimmt wird; z.B. "Ruf von Max Meier um 12:01, 2000-03-04" . Hierzu erfolgt eine Abfrage in einem geeigneten verfügbaren Verzeichnis, wofür auch ein lokal seitens des Endgeräts TEG als "persönliches Telefonbuch" in Form einer Tabelle gespeichertes Verzeichnis verwendet werden kann. Die Anruferbezeichnung kann zusätzlich zu oder (wie in dem obigen Beispiel der Name "Max Meier") anstelle von der Rufnummer des Absenders in der Hinweisnachricht eingetragen werden.
- eine Bezeichnung des Kommunikationsdienstes und/oder des Netzes der Anfrage 1, z.B. "Ruf von Mobiltel (GSM-A1) 0043664123456 um 12:01, 2000-03-04" ; dies kann insbesondere dann von Interesse sein, wenn der anrufende Teilnehmer von einem anderen Netz aus anruft.
- vom Anrufer zusätzlich gegebene Daten, die in dem vorgegebenen Format der Hinweisnachricht wiedergegeben werden können; beispielsweise eine Rückrufnummer des Anrufers oder seine e-Mail-Adresse. Die Eingabe dieser Daten durch den Anrufer geht aus dem nachfolgenden Beispiel hervor.

### Anrufbehandlung mit Empfang einer Mitteilung des Anrufers

Eine Erweiterung des soeben dargestellten Ablaufs gestattet den Anrufer, eine Mitteilung zu hinterlassen, die ebenfalls an die Zieleinrichtung TNZ zugestellt wird. Ein zugehörendes Signalablaufdiagramm ist in Fig. 3 gezeigt.

Auch in dieser Variante geht von dem Anrufer TNA ein Anruf 1 aus, welcher nach bereits beschrieben Art dem Endgerät TEG in Form einer Kommunikationsanfrage 1 signalisiert wird. Das Endgerät TEG empfängt die Kommunikationsanfrage 1 und wertet die empfangene Kommunikationsanfrage 1 aus; die den Anrufer TNA betreffende Adressinformation wird zwischengespeichert.

Im Gegensatz zu dem anhand Fig. 2 beschriebenen Vorgang nimmt in diesem Fall das Endgerät TEG den Verbindungswunsch an, z.B. durch Signalisierung 21 der Rufannahme nach bekannter Art in dem analogen Netz bzw. - im Falle eines ISDN-Netzes - durch Senden einer CONNECT-Nachricht 21, wodurch nunmehr eine Verbindung aufgebaut wird.

Sodann wird über die Verbindung eine Mitteilung des Anrufers entgegengenommen. Hierfür wird zunächst eine Aufforderung 22 für eine Mitteilung gesendet. Diese Aufforderung ist im Falle einer Telefonverbindung z.B. eine Ansage ähnlich jenen, die von Anrufbeantwortern her bekannt sind, beispielsweise "Bitte hinterlassen Sie eine Nachricht, diese wird weitergeleitet."; wenn z.B. ein Telefaxdienst bedient wird, ergeht die übliche Bereitschaftssignalisierung. Daraufhin wird eine von dem Absender gesendete Mitteilung 24 empfangen und ebenfalls als Teil der anrufbezogenen Daten gespeichert. Das Ende der Mitteilung wird auf geeignete Weise angezeigt, im einfachsten Falle durch die Signalisierung 25 des Verbindungsabbaus nach bekannter Art.

Daraufhin wird die Hinweisnachricht 31 nach gleicher Art wie die oben beschriebene Hinweisnachricht 3 erzeugt und an den Zielteilnehmer TNZ gesendet, wobei die Mitteilung des Absenders TNA als Anhang 4 der Hinweisnachricht 31 gesendet wird. Die eigentliche Hinweisnachricht 31 und die Mitteilung 4 können als erweiterte Hinweisnachricht 30 aufgefasst werden, deren Übertragung in einem Datenübermittlungsvorgang über die Verbindung zwischen den Endgeräten TEG und TEZ erfolgt.

Eine besonders vereinfachte Übertragung ergibt sich, wenn eine in Sprachform gegebene Mitteilung des Absenders mittels einer Sprache-zu-Text-Konversion in Textform konvertiert wird, und der so gewonnene Text als der Hinweisnachricht zugeordnete Mitteilung zu dem Zielteilnehmer übertragen wird. Hierbei kann die Mitteilung als Teil des Textinhalts der SMS-Hinweisnachricht oder in einer zweiten, der Hinweisnachricht folgenden Kurznachricht übertragen werden.

### Übermittlung der Hinweisnachricht als Kurznachricht

Der SMS-Dienst dient der Punkt-Zu-Punkt-Übertragung von Kurznachrichten ('Short Messages') und wird im Rahmen der GSM-Protokollarchitektur auf der Signalisierungsebene realisiert. Er umfasst dort den Transport paketorientierter Nutzdaten von und zu Mobilstationen. Die Kurznachrichten werden stets über ein Short-Message-Dienstzentrum (SM SC = 'Short Message Service Center') im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät - eine weitere Mobilstation oder auch ein Faxgerät od.dgl. - weiter.

Zur Realisierung des SMS-Dienstes definiert der GSM-Standard eine spezielle Protokollarchitektur. Diese ist in den ETSI-Spezifikationen festgelegt und wird in der Literatur hinreichend beschrieben (vgl. etwa J. Eberspächer, H. J. Vögel: 'GSM Global System for mobile communication', Stuttgart, 1997), sodass eine genauere Beschreibung hier entbehrlich ist und auf das anhängende Normen-/Dokumentenverzeichnis verwiesen werden kann.

Die hier vorgeschlagene Realisierung des Kurznachrichtendienstes im Festnetz schließt den grundlegenden Gedanken ein, ohne Rücksicht auf die tiefgreifenden Systemunterschiede zwischen Mobilfunknetzen einerseits und den bekannten leitungsgebundenen Netzen andererseits die bewährte SMS-Protokoll-architektur des GSM-Standards (bzw. auch eine vergleichbare Architektur des UMTS-Standards) auf das Festnetz gewissermaßen abzubilden und auszuweiten.

Mit den nachfolgend beschriebenen Spezifikationen wird das Übertragungsprotokoll und die physikalischen und administrativen Voraussetzungen zur Übertragung von Kurznachrichten im Short-Message(SMS)-Format zwischen dem Endgerät und dem Short-Message-Dienstzentrum definiert. Das Übertragungsprotokoll wird hierbei bevorzugt in enger Anlehnung an das beim GSM-Standard definierte Protokoll festgelegt. Hiermit wird das Ziel verfolgt, die Übermittlung von Kurznachrichten als für das Festnetz neuen Dienst mit geringem Aufwand und hoher Kompatibilität mit bestehenden Systemen anzubieten. Es wird ein einheitliches SMS-Format im GSM-Netz und im Festnetz verwendet, wodurch außerdem die reibungslose Übermittlung von Kurznachrichten zwischen einem nach dem GSM-Standard aufgebauten und betriebenen Mobilfunknetz und dem erfindungsgemäß ausgerüsteten Festnetz gewährleistet wird. Zudem bietet der mit dieser Ausführung der Erfindung eingeschlagene Weg den erheblichen praktischen Vorteil, dass in der Spezifikation des SMS-Dienstes weitestgehend auf die anerkannten und mittlerweile erprobten und bewährten GSM-Spezifikationen zurückgegriffen werden kann.

In der physikalischen Schicht erfolgt die Datenübertragung zwischen Endgerät und Dienstzentrum mittels DTMF-Signalisierung und/oder über eine nach ETS 300 659-1 und ETS 300 659-2 spezifizierte FSK ('Frequency Shift Keying' - Frequenzumtastkodierung) Off-Hook-Signalisierung. Diese genannten Übertragungsverfahren können in beliebigen Kombinationen eingesetzt werden. Insbesondere kann das Endgerät eine Signalisierung mittels DTMF vornehmen und das Dienstzentrum kann die FSK-Modulation nutzen, wobei natürlich die jeweils empfangende Einheit für das angewandte Verfahren angepasst sein muss.

Oberhalb der physikalischen Schicht ist eine Datenverbindungs-Schicht spezifiziert, die den logischen Verbindungsaufbau und das Aufsetzen auf den Standard GSM-SMS gewährleistet. Der letztere Standard ist insbesondere in den ETSI-Dokumenten GSM04.07 (ETS 300 556), GSM04.11 und GSM03.40 definiert. In Kompatibilität hierzu kann die Datenverbindungs-Schicht in Anpassung an die konkreten Anforderungen frei definiert werden.

Gemäß einer vorteilhaften Ausprägung dieser Lösung sind die neu definierte physikalische Schicht und Datenverbindungs-Schicht mit den bestehenden Schichten ('Layers') des GSM-SMS-Protokollsatzes kombiniert. Hierbei handelt es sich um die Short-Message-Transferschicht ('Short Message Transfer Layer', SM-TL) gemäß ETSI-Dokument GSM 03.40, die Short-Message-Relaisschicht ('Short Message Relay Layer', SM-RL) nach GSM 03.40 und 04.11 sowie die Verbindungsmanagement-Schicht ('Connection Management Layer', CM) nach GSM 04.11.

In der zuletzt genannten Schicht CM ist speziell eine zusätzliche Nachricht zur Signalisierung des Verbindungszustandes ('CP-Connect') definiert, deren Format nach GSM 04.07, Kapitel 11, bestimmt ist. Eine spezielle Festlegung gibt es auch hinsichtlich des Formates einer Nachricht in der Datenverbindungs-Schicht DL. Hierauf wird weiter unten genauer eingegangen.

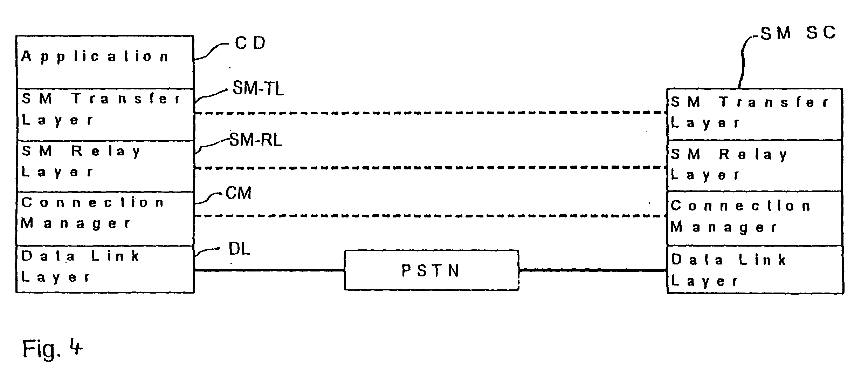

Im folgenden wird unter Bezugnahme auf die Fig. 4 bis 8 die Übermittlung von Kurznachrichten am Beispiel eines Kurznachrichtenaustausches zwischen einem Endgerät CD (stellvertretend für eines der Endgeräte TEG,TNZ der Fig. 1) und dem an das Festnetz angeschlossenes Short-Message-Dienstzentrum SM SC dargestellt. Auf das Zusammenspiel dieser Komponenten beziehen sich die nachfolgenden Ausführungen zur Erläuterung der Erfindung.

Fig. 4 zeigt das zugehörige SI-Schichtenmodell, oberhalb der (hier nicht dargestellten) physikalischen Schicht. Die Schichtstruktur umfasst zunächst eine - weiter unten genauer spezifizierte - Datenverbindungs-Schicht DL ('Data Link Layer') und weiterhin die an sich aus dem GSM-SMS-Standard bekannten Schichten Verbindungsmanager CM ('Connection Manager'), Short-Message-Relaisschicht SM-RL ('SM Relay Layer') und Short-Message-Transferschicht SM-TL ('SM Transfer Layer') sowie - auf Seiten des Endgerätes - die Anwendungsschicht ('Application').

Die Protokollbeschreibungen der Schichten SM-TL, SM-RL und CM sind den ETSI-Dokumenten GSM 03.40 und GSM 04.11 zu entnehmen.

Die Grundvoraussetzung zur Übertragung von Kurznachrichten über das Festnetz PSTN ist eine Durchschaltvermittlung zwischen den beteiligten Einheiten (Endgerät CD und Short-Message-Dienstzentrum SM SC). Es ist dann unerheblich, ob die Einheiten über ISDN oder eine analoge Schnittstelle angeschlossen sind.

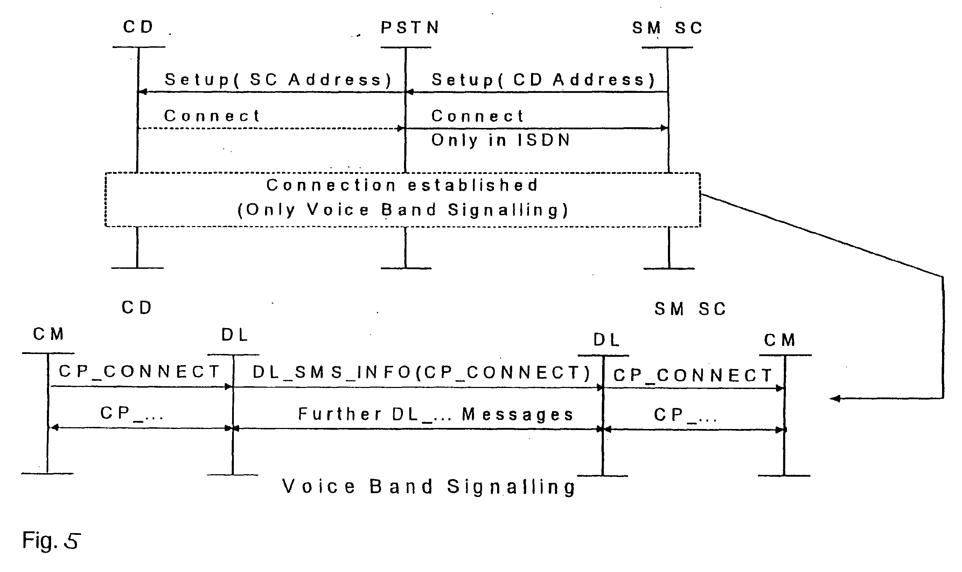

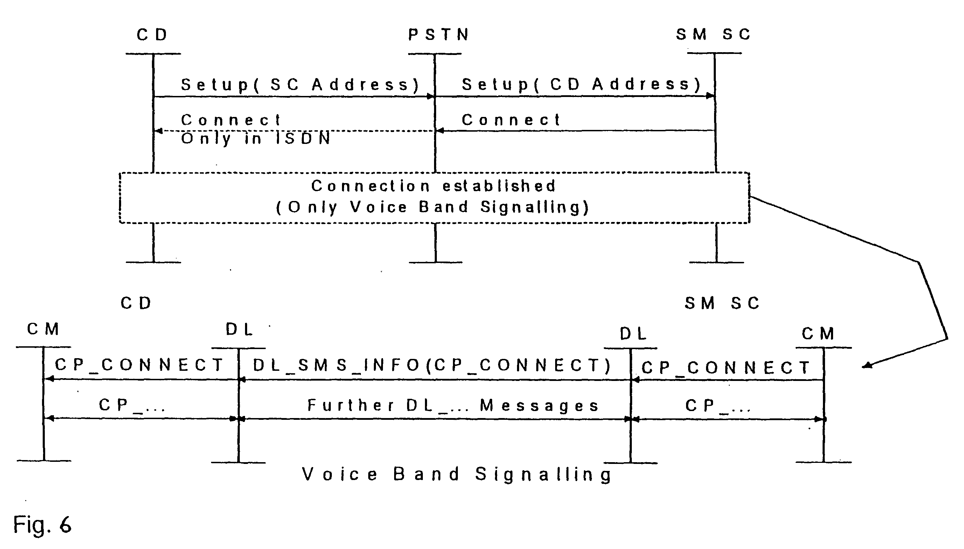

In Fig. 5 und 6 ist schematisch der Aufbau einer Verbindung ausgehend von einem Telekommunikations-Endgerät (Fig. 5) bzw. ausgehend von dem Short-Message-Dienstzentrum (Fig. 6) dargestellt. Diese Diagramme sind für den Fachmann selbst erklärend und bedürfen daher hier keiner weiteren Erläuterung.

Im Falle eines ISDN-Netzes sind die Nachrichten ('Messages') funktioneller Art und werden im ISDN-D-Kanal übertragen. Bei einem analogen Netz handelt es sich um Rufimpulse und Belegt-Signale. Nach Aufbau der Verbindung werden sämtliche Informationen zwischen den Einheiten per FSK-Signalisierung im Sprachband übertragen, speziell in Übereinstimmung mit den ETSI-Spezifikationen ETS 300 659-1 und ETS 300 659-2.

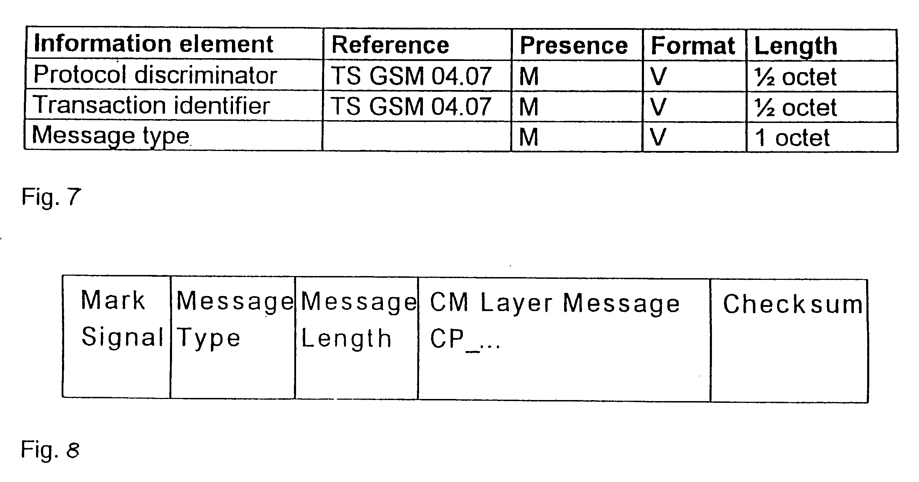

In Fig. 7 ist der Aufbau einer zusätzlichen Nachricht 'CP-Connect' gezeigt, die zur Benachrichtigung der rufenden Einheit seitens der angerufenen Einheit über den Aufbau der Verbindung dient. Diese Benachrichtigung ist erforderlich, um die Abläufe in der CM-Schicht in Gang zu setzen. Die Nachrichtenartkodierung ist: 0x40 = 0100 0000B, und das Format folgt GSM 04.7, Kapitel 11.

Die Schicht DL ermöglicht dem Verbindungsmanager (Schicht CM) die Absendung und den Empfang von Nachrichten mit der Partner-Einheit, sie stellt die Bitfehlererfassung bereit und realisiert für eine Nachricht in der Schicht CM ein Ankündigungssignal ('Mark Signal').

In Fig. 8 ist das Format einer Nachricht in der Datenverbindungs-Schicht dargestellt. Das Feld "Mark Signal" besteht aus einem Block von 80 ± 25 Bit. Das Feld "Message Type" umfasst ein Oktett und enthält ein binär kodierte Identifizierungs-Kennzahl für die Nachricht. Die Kodierung für einen DL_SMS_INFO Message Type ist: 0x11 = 0001 0001B.
Die Kodierung für einen DL_SMS_ERROR Message Type ist:
0x12 = 0001 0010B.

Das Feld "Message Length" umfasst ein Oktett und enthält die binär kodierte Anzahl von Oktetts der Nachricht (unter Ausnahme der Oktetts des Message Type, der Message Length und der Checksum). Insgesamt ist eine Nachrichtenlänge bis zu 255 Oktetts erlaubt. Das Feld "Checksum" umfasst ein Oktett und enthält die beiden Komplemente der Summe aller Oktetts in der Nachricht, beginnend vom "Message Type"-Oktett bis zum Ende, modulo 256.

Im Falle eines Prüfsummen-Fehlers sendet die Datenverbindungs-Schicht der empfangenden Einheit eine Nachricht des Typs "DL SMS ERROR" an die (ursprünglich) sendende Einheit. In dieser Nachricht ist das Datenfeld leer und die Nachrichtenlänge (Message Length) auf Null gesetzt. Die Datenverbindungs-Schicht der sendenden Einheit hat daraufhin die letzte gesendete Nachricht zu wiederholen.

Zur physikalischen Schicht ist noch anzumerken, dass im Falle einer FSK-Signalisierung eine Halbduplex-1200-Baud-Modulation eingesetzt werden kann. Im Falle einer DTMF-Signalisierung wird jedes Oktett einer Nachricht in der Datenverbindungs-Schicht in das höhere (obere) und niedere (untere) Halbbyte aufgeteilt. Jedes Halbbyte wird mit einem DTMF-Bit kodiert. Zuerst wird das obere Halbbyte gesendet und dann das untere. Im Falle der DTMF-Signalisierung wird das Ankündigungssignal der DL-Nachricht weggelassen.

Hinsichtlich der Signalisierungsmethode bestehen diverse Kombinationsmöglichkeiten; im Normalfall wird im Telekommunikations-Endgerät CD eine Auswahl fest installiert, die dann vom Nutzer nicht mehr zu verändern ist.

### Übermittlung der Hinweisnachricht in Sprachform

In einer alternativen Variante der Erfindung kann die Hinweisnachricht 3,31 in sprachkodierter Form übertragen werden. Für diese Variante werden die Teile der Hinweisnachricht, die in Text- oder Zifferform vorliegen, durch eine Sprachkonversion in Sprachform kodiert, bzw. für immer wieder vorkommende Textteile (wie z.B. in den obigen Nachrichten: "Ruf" oder "Ruf an", Tages- und Monatsnamen usf.) vorgegebene Sprachbausteine verwendet. Auf diese Weise lassen sich z.B. die oben genannten Textinhalte ohne weiteres in Sprachform konvertieren und im Rahmen einer üblichen Festnetz-Telefonverbindung übertragen. Diese Variante ist insbesondere in solchen Festnetzen von Vorteil, in denen kein SMS- oder anderer Messaging-Dienst vorgesehen ist.

### Filterung

In einer Weiterbildung der Erfindung kann seitens des Endgeräts TEG die Bearbeitung der Kommunikationsanfrage in Abhängigkeit von den darin enthaltenen Daten erfolgen, wie z.B. der Absender-Rufnummer, dem Sprecher - beispielsweise aufgrund einer Sprechererkennung -, dem Netz des Anrufenden usw. Auf diese Weise kann eine Filterung der hereinkommenden Anrufe realisiert werden. Die Filterung kann z.B. nach Empfang der Anfrage 1 erfolgen - in Fig. 2 und 3 durch fil gekennzeichnet - oder erst vor dem Erstellen bzw. Senden der Hinweisnachricht 3,31.

Beispielsweise kann der Benutzer des Endgeräts einstellen, dass eine Benachrichtigung nur für jene Anfragen erfolgt, welche von bestimmten Absendern stammen, wobei diese anhand der in der Kommunikationsanfrage enthaltenen Absender-Rufnummer erkannt werden; hierbei kann auf die Übereinstimmung der gesamten Nummer oder eines Präfixes geprüft werden, sodass im letzteren Fall alle Anrufe eines Landes oder Gebietes bearbeitet werden. Vor Erstellen der Hinweisnachricht wird überprüft, ob die Rufnummer des Anrufers mit einer der Nummern bzw. Präfix-Nummern übereinstimmt, die in einer Liste abgespeichert sind, welche zuvor von dem Benutzer konfiguriert worden ist. Selbstverständlich kann aufgrund dieser Liste auch eine negative Auswahl erfolgen, d.h. lediglich für die so spezifizierten Absender-Nummern erfolgt keine Benachrichtigung.

Auf gleiche Art kann zum Zeitpunkt fil eine Filterung realisiert werden, gemäß der für einen Anruf, sofern eine Benachrichtigung zum Zielteilnehmer vorgesehen ist, entschieden wird, ob die Verarbeitung des Anrufs ohne oder mit Entgegennahme einer Mitteilung des Anrufers (vgl. Fig. 2 bzw. 3) erfolgt. Die Filterung fi2 kann sich darüber hinaus auf Daten beziehen, die mit der Mitteilung 24 erhalten wurden.

Die Benachrichtigung kann auch an mehrere Zielteilnehmer erfolgen. In diesem Fall (welcher der Übersichtlichkeit halber lediglich in Fig. 2 angedeutet ist) wird nach Erhalt und Verarbeitung einer Anfrage 1 eine Anzahl von Hinweisnachrichten 3,3',3'' an jeweils eine Zieladresse TNZ,TNZ',TNZ'' gesendet, oder es ergeht nur eine Hinweisnachricht an eine der möglichen Zieladressen TNZ,TNZ',TNZ'', welche gemäß der Konfiguration aufgrund der Parameter z.B. der anrufbezogenen Daten ausgewählt wird. Hierbei werden die Zieladressen und gegebenenfalls eine Filter-Vorschrift, nach der eine Zieladresse ausgewählt werden soll, ebenfalls von dem Benutzer in einem Konfigurationsvorgang eingegeben.

Es sei darauf hingewiesen, dass die Erfindung sich nicht auf die Verwendung einer Benachrichtigung mittels SMS-Nachrichten für Telefonanrufe im Festnetz beschränkt ist. Als Dienst für die Aussendung der Hinweisnachricht 3,31 kann jeder geeigneter Messaging-Dienst des vorliegenden Netzes verwendet werden, wofür z.B. auch e-Mail-Nachrichten, Telefax-Nachrichten, Sprachbox-Dienste od.dgl. möglich sind, sofern diese von dem Festnetz PSTN bzw. den betreffenden Endgeräten TEG,TNZ unterstützt werden. Falls mehrere Nachrichtendienste zu Auswahl stehen, kann die Auswahl aufgrund einer Konfiguration durch den Benutzer und/oder mit Hilfe eines vorgebbaren oder vom Benutzer eingestellten Filters erfolgen.

So kann, um nur ein Beispiel von vielen zu nennen, aufgrund einer Kommunikationsanfrage für ein Bildtelefonat eine Mitteilung 24 des Anrufers in Form eines Bildes entgegengenommen werden, wobei dieses Bild dann in einer Telefaxnachricht, die als Hinweisnachricht 31 nach der Erfindung dient, übertragen wird. Die übrigen Angaben, wie z.B. die Rufadresse des Anrufers, Anrufzeit usw., liegen in Textform vor und werden vor Beginn der Telefaxaussendung nach bekannter Art z.B. in eine Titelzeile der Telefaxnachricht konvertiert und der Übertragung des Bildes per Telefax vorangestellt.

## Patentansprüche

1. Verfahren zur Verarbeitung einer Kommunikationsanfrage (1) für eine Kommunikationsverbindung eines leitungsgebundenen Telekommunikationsnetzes (PSTN) seitens eines über eine Endgeräteschnittstelle (TSS) an das Netz (PSTN) angebundenen Endgeräts (TEG), an welches die Kommunikationsanfrage (1) gesendet wird, wobei sich die Kommunikationsanfrage auf die Herstellung einer Verbindung des Netzes von einem Anrufer (TNA) zu dem Endgerät (TEG) bezieht,
**gekennzeichnet durch** folgende seitens des Endgeräts (TEG) ausgeführten Schritte:
a) Empfang der Kommunikationsanfrage (1) über die Endgeräteschnittstelle,
b) Auswerten der Informationen, welche mit der Kommunikationsanfrage empfangen wurden, und Zwischenspeichern zumindest eines Teils der so gewonnenen Informationen als anrufbezogene Daten,
c) Erzeugen einer Hinweisnachricht (3,31) anhand der anrufbezogenen Daten, sowie
d) Aussenden der Hinweisnachricht (3,31) an zumindest eine konfigurierbare Zieladresse (TNZ) über die Endgeräteschnittstelle (TSS) unter Verwendung eines Nachrichtendienstes des leitungsgebundenen Telekommunikationsnetzes (PSTN),
wobei das Aussenden der Hinweisnachricht (Schritt d) nach Beendigung des der Kommunikationsanfrage (1) zugeordneten Kommunikationsvorgangs erfolgt.

2. Verfahren nach Anspruch 1,
**dadurch gekennzeichnet, dass** seitens des Endgeräts (TEG)
in Schritt b) zusätzlich die Kommunikationsanfrage (1) angenommen wird, wobei von dem Festnetz eine Verbindung zu dem Endgerät hergestellt wird (21), und über diese Verbindung eine Mitteilung (24) des Anrufers (TNA) entgegengenommen und mit den anrufbezogenen Daten abgespeichert wird und nach Beendigung dieser Verbindung in Schritt d) diese abgespeicherte Mitteilung (4) zusammen mit oder als Teil der Hinweisnachricht (31) an die Zieladresse (TNZ) ausgesendet wird.

3. Verfahren nach Anspruch 2,
**dadurch gekennzeichnet, dass** in Schritt b) anhand der anrufbezogenen Daten überprüft wird, ob gemäß einer voreinstellbaren Vorschrift (fil) eine Mitteilung entgegenzunehmen ist, und nur falls diese Überprüfung positiv ist, die Kommunikationsanfrage (1) angenommen und eine Mitteilung (24) des Anrufers entgegengenommen wird.

4. Verfahren nach einem der Ansprüche 1 bis 3,
**dadurch gekennzeichnet, dass** die Hinweisnachricht (3,31) in ein Kurznachrichten-Format gebracht und die so erzeugte Kurznachricht unter Verwendung eines Kurznachrichten-Dienstes ausgesendet wird.

5. Verfahren nach Anspruch 4,
**dadurch gekennzeichnet, dass**
- vor dem Aussenden der Kurznachricht über eine adäquat spezifizierte Datenverbindungsschicht (DL) ein logischer Verbindungsaufbau realisiert wird und
- die Kurznachricht im Kurznachrichten-Format in einer adäquat spezifizierten physikalischen Schicht über DTMF-oder FSK-Off-Hook-Signalisierung an ein Short-Message-Dienstzentrum (SMSC) gesendet wird.

6. Telekommunikationsendgerät (TEG), welches über eine Endgeräteschnittstelle (TSS) an ein leitungsgebundenes Telekommunikationsnetz (PSTN) anbindbar ist, mit einer Steuereinrichtung (STE), einer Speichereinrichtung (SPR) und einer Sende/Empfangseinrichtung (SEE) zum Empfangen und Senden von Nachrichten und Signalisierungen über die Endgeräteschnittstelle einschließlich des Empfangs von Kommunikationsanfragen (1), welche sich auf die Herstellung einer Verbindung des Netzes (PSTN) von einem Anrufer (TNA) zu dem Endgerät (TEG) beziehen,
**dadurch gekennzeichnet,**
**dass** die Sende/Empfangseinrichtung (SEE) zum Aussenden von Hinweisnachrichten (3,31) an zumindest eine konfigurierbare Zieladresse (TNZ) über die Endgeräteschnittstelle (TSS) unter Verwendung eines Nachrichtendienstes des leitungsgebundenen Telekommunikationsnetzes (PSTN) eingerichtet ist, und dass die Steuereinrichtung (STE) zum Auswerten von über die Sende/Empfangseinrichtung empfangenen Kommunikationsanfragen (1), einschließlich des Ableitens anrufbezogener Daten und Abspeicherns dieser Daten auf der Speichereinrichtung (SPR), und zum Erzeugen von Hinweisnachrichten (3,31) betreffend jeweils eine Kommunikationsanfrage (1) anhand der anrufbezogenen Daten und Weitergabe dieser Nachrichten (3,31) an die Sende/Empfangseinrichtung eingerichtet ist,
wobei das Aussenden der Hinweisnachrichten (3,31) jeweils nach Beendigung des Kommunikationsvorgangs der zugeordneten Kommunikationsanfrage (1) erfolgt.

7. Endgerät nach Anspruch 6,
**dadurch gekennzeichnet, dass** die Sende/Empfangseinrichtung (SEE) dazu eingerichtet ist, die Hinweisnachricht (3,31) in ein Kurznachrichten-Format zu bringen und die so erzeugte Kurznachricht unter Verwendung eines Kurznachrichten-Dienstes auszusenden.

8. Endgerät nach Anspruch 7,
**dadurch gekennzeichnet, dass** die Sende/Empfangseinrichtung (SEE) Mittel zur Implementierung des SMS-Übertragungsprotokolls zur Ein/Ausgabe von Kurznachrichten aufweist.
